# EUROPEAN PATENT APPLICATION

(11) **EP 4 167 443 A1**
(43) Date of publication of application: **19.04.2023**
(21) Application number: 21870810.5
(22) Date of filing: 12.05.2021
(51) Int. Cl.: H02K 5/04, H02K 5/20, H02K 5/10, H02K 9/06

(54) **MOTOR**

(30) Priority: 24.09.2020 CN 202011012097
(71) Applicant: Dreame Innovation Technology (Suzhou) Co., Ltd., Suzhou, Jiangsu 215104 (CN)
(72) Inventor: GAO, Chunchao, Suzhou, Jiangsu 215104 (CN); ZHENG, Lei, Suzhou, Jiangsu 215104 (CN)
(74) Representative: dompatent von Kreisler Selting Werner - Partnerschaft von Patent- und Rechtsanwälten mbB
(86) International application number: PCT/CN2021/093413
(87) International publication number: WO 2022/062423

(57) **Abstract**

Disclosed in the present application is a motor, which comprises: a motor housing, which is configured as internally hollow, so that a first accommodation cavity is formed, and the motor housing is provided with an annular support frame, the annular support frame being encirclingly arranged on an outer side of the motor housing about the circumferential direction of the motor housing; a fixed impeller, which is removably arranged at a side of the motor housing near the annular support frame, and is engaged with the annular support frame; an air cover, which is in abutment with the fixed impeller, said air cover being configured as internally hollow so that a second accommodation cavity is formed; a moving impeller, which is arranged within the second accommodation cavity, an outer cover, which is sleeved on a peripheral face of the air cover and is engaged with the annular support frame; and a motor main body, which is arranged within the motor housing and partially extends out of an accommodation cavity and is connected to the moving impeller; wherein a heat dissipation channel which establishes communication between the first accommodation cavity and the second accommodation cavity is further provided on the motor, and a first air inlet opening in communication with the first accommodation cavity is provided on the motor housing. By the described means, the present application has the advantageous quality of a good heat dissipation effect.

## Description

### TECHNICAL FIELD

The present application relates to the technical field of motors, and in particular, to brushless motors.

### BACKGROUND

A motor refers to an electromagnetic device that realizes the conversion or transfer of electrical energy according to the law of electromagnetic induction. DC motors can be divided into brushless DC motors and brushed DC motors according to their structure and working principle. Although the development time of brushless motor in my country is short, it has developed rapidly with the increasing maturity and improvement of technology. Brushless motors have been widely used in aircraft model, medical equipment, household appliances, electric vehicles and other fields. However, due to the poor heat dissipation effect of the traditional motor, the internal temperature of the motor rises, which affects the performance of the motor.

### SUMMARY

In view of the deficiencies in the above technologies, the present application provides a motor which has the advantage of good heat dissipation effect.

In order to solve the above-mentioned technical problems, the technical solution adopted by the present application is:

a motor, including: a motor housing, an interior of the motor housing being hollow so as to form a first accommodating chamber, the motor housing being provided with an annular support frame, the annular support frame being disposed on an outer side of the motor housing around a circumference of the motor housing; a fixed impeller, the fixed impeller being detachably disposed on a side of the motor housing adjacent to the annular support frame, the fixed impeller being clamped with the annular support frame; an air cover, the air cover being in contact with the fixed impeller, an interior of the air cover being hollow so as to form a second accommodating chamber; a movable impeller, the movable impeller being disposed in the second accommodating chamber and is located on a side of the fixed impeller away from the annular support frame, the movable impeller being adapted for blowing air in the second accommodating chamber to form high-speed airflow; an outer cover, the outer cover being sleeved on an outer peripheral surface of the air cover and being clamped with the annular support frame; and a motor body, the motor body being disposed on the motor housing and partially extending out of the first accommodating chamber to be connected to the movable impeller, the motor body driving the movable impeller to rotate so that the second accommodating chamber forms a negative pressure; wherein the motor is further provided with a heat dissipation channel communicating with the first accommodating chamber and the second accommodating chamber; the motor housing is also provided with a first air inlet communicating with the first accommodating chamber; and when the movable impeller rotates, the negative pressure generated by the movable impeller causes the air to flow in from the first air inlet, sequentially flow through the first accommodating chamber, the heat dissipation channel and the second accommodating chamber, and then be discharged.

In an embodiment of the present application, an air flow channel communicating with the first accommodating chamber is formed on the motor housing; the air flow channel extends from the first accommodating chamber to the annular support frame; an outlet of the air flow channel is formed on an outer peripheral surface of the annular support frame; at least one air guide groove is formed on an inner wall of the outer cover to communicate with the air flow channel and the second accommodating chamber; the air guide groove and an outer wall of the air cover are enclosed to form an air channel; and wherein the air flow channel and the air channel constitute the heat dissipation channel, an inlet of the air channel is facing the outlet of the air flow channel, and the outlet of the air channel communicates with the second accommodating chamber.

In an embodiment of the present application, the fixed impeller includes a first fixed impeller and a second fixed impeller, a first air inlet is formed in the second accommodating chamber on a side of the air cover away from the motor housing, a first air outlet is formed in the second accommodating chamber on another side of the air cover adjacent to the motor housing; and wherein the movable impeller, the first fixed impeller and the second fixed impeller are disposed in sequence from the first air inlet to the first air outlet.

In an embodiment of the present application, the second fixed impeller includes a second fixed impeller body and a connecting portion which surrounds a circumference of the second fixed impeller body, and is disposed around an outer periphery of the second fixed impeller body; and wherein the first air outlet is in contact with the connecting portion.

In an embodiment of the present application, a limiting convex ring is annularly disposed on an outer peripheral surface of the connecting portion, the limiting convex ring is adapted for dividing the outer peripheral surface of the connecting portion into a first connecting end adjacent to the air cover and a second connecting end far away from the air cover; and wherein the first air outlet is in contact with the first connecting end, and the second connecting end is clamped with the annular support frame along an axial direction of the motor housing.

In an embodiment of the present application, an interior of the outer cover is hollow so as to form a third accommodating chamber; a second air inlet is formed in the third accommodating chamber on a side of the outer cover away from the motor housing; a second air outlet is formed in the third accommodating chamber on another side of the outer cover adjacent to the motor housing; and wherein a clamping structure is provided at the second air outlet, the outer cover is connected with the annular support frame through the clamping structure, the air guide groove and the clamping structure are located on an extension line of a same generatrix, and an inlet of the air guide groove is disposed adjacent to the clamping structure.

In an embodiment of the present application, a holding groove matched with the clamping structure is provided on the second fixed impeller and/or the annular support frame.

In an embodiment of the present application, the motor housing includes a main housing and a rear cover, an interior of the main housing is hollow and defines an opening at one end, and the rear cover is detachably covered at the opening of the main housing to form the first accommodating chamber; and wherein the annular support frame is formed on the main housing, the first air inlet is formed on the rear cover, and an installation gap exists between the motor body and an inner wall of the motor housing, so as to form a space for air circulation in the motor housing.

In an embodiment of the present application, the motor body includes a rotating shaft disposed on the motor housing, a rotor located in the first accommodating chamber and fixed on the rotating shaft, and a stator disposed in the first accommodating chamber and disposed around an outer circumference of the rotor, a portion of the rotating shaft extending to an outside of the main housing is connected with the movable impeller; and wherein a plurality of coils are wound around the stator, and at least one air flow channel is provided between every two adjacent coils.

In an embodiment of the present application, the motor is a wet and dry motor which is also provided with a waterproof sealing structure; wherein the waterproof sealing structure includes a waterproof gasket disposed on the rotating shaft and rotating with the rotating shaft, and a sealing portion formed on the motor housing and matched with the waterproof gasket; and wherein the waterproof gasket is provided with a first annular rib distributed around a circumference of the rotating shaft, a second annular rib distributed around the circumference of the rotating shaft is disposed in the sealing portion, and the first annular rib and the second annular rib are distributed alternately.

The present invention also provides a motor, including: a motor housing, an interior of the motor housing being hollow so as to form a first accommodating chamber, the motor housing being provided with a first air inlet communicating with the first accommodating chamber; an air cover, the air cover being disposed on the motor housing, an interior of the air cover being hollow so as to form a second accommodating chamber, a first air inlet is formed in the second accommodating chamber on a side of the air cover away from the motor housing; a movable impeller, the movable impeller being disposed in the second accommodating chamber, the movable impeller being adapted for blowing air in the second accommodating chamber to form high-speed airflow; an outer cover, the outer cover being disposed on the motor housing and sleeved on an outer peripheral surface of the air cover, the outer cover being provided with a second air inlet which is consistent with an extending direction of the first air inlet; and a motor body, the motor body being disposed on the motor housing, the motor body extending out of the first accommodating chamber, the motor body being connected to the movable impeller to drive the movable impeller to rotate, so that the second accommodating chamber forms a negative pressure; wherein an air flow channel communicating with the first accommodating chamber is formed on the motor housing; an air channel communicating with the air flow channel and the second accommodating chamber is formed between an inner wall of the outer cover and an outer wall of the air cover; and when the movable impeller is working, the negative pressure generated by the movable impeller causes the air to flow in from the first air inlet, flow through the first accommodating chamber, the air flow channel, the air channel and the second accommodating chamber in sequence, and then be discharged.

In an embodiment of the present application, an air guide groove is formed on the inner wall of the outer cover, and the air guide groove and the outer wall of the air cover are enclosed to form the air channel.

In an embodiment of the present application, an outlet portion of the air channel is formed on a perforated wall of the second air inlet.

In an embodiment of the present application, the air cover is disposed in the outer cover.

In an embodiment of the present application, the outer cover is a shock-absorbing sleeve which is made of rubber material.

In an embodiment of the present application, a second air outlet opposite to the second air inlet is also formed on the outer cover, a clamping structure is provided at the second air outlet, and the outer cover is detachably connected to the motor housing through the clamping structure.

In an embodiment of the present application, the motor body has a rotation center axis, an extending direction of the first air inlet is collinear or parallel with an extending direction of the rotation center axis, an extending direction of the air flow channel is perpendicular to the extending direction of the rotation center axis.

In an embodiment of the present application, the motor housing includes a main housing and a rear cover, an interior of the main housing is hollow and defines an opening at one end, and the rear cover is detachably covered at the opening of the main housing to form the first accommodating chamber.

In an embodiment of the present application, the air cover is disposed on a side of the main housing away from the rear cover, the first air inlet is formed on the rear cover, and the air flow channel is disposed on a side of the main housing adjacent to the air cover.

In an embodiment of the present application, the motor body includes a rotating shaft disposed on the motor housing, a rotor located in the first accommodating chamber and fixed on the rotating shaft, and a stator disposed in the first accommodating chamber and disposed around an outer circumference of the rotor, a portion of the rotating shaft extending to an outside of the main housing is connected with the movable impeller; and wherein an installation gap exists between the motor body and an inner wall of the motor housing, which is adapted to provide a flow space for airflow.

The present invention also provides a motor, including: a motor housing, the motor housing being provided with an annular support frame, the annular support frame being disposed around an outer side of the motor housing along a circumferential direction of the motor housing; an air cover, the air cover being disposed on a side of the motor housing, an interior of the air cover being hollow so as to form a second accommodating chamber; a movable impeller, the movable impeller being disposed in the second accommodating chamber, the movable impeller being adapted for blowing air in the second accommodating chamber to form high-speed airflow; and an outer cover, the outer cover being sleeved on an outer peripheral surface of the air cover and being clamped with the annular support frame; wherein a side of the outer cover adjacent to the annular support frame is provided with a clamping structure, and the outer cover is clamped with the annular support frame through the clamping structure.

In an embodiment of the present application, an interior of the outer cover is hollow so as to form a third accommodating chamber, a second air outlet is formed in the third accommodating chamber on a side of the outer cover adjacent to the annular support frame, and a second air inlet is formed in the third accommodating chamber on another side of the outer cover away from the annular support frame; wherein the clamping structure is provided at the second air outlet.

In an embodiment of the present application, the clamping structure is a clamping block formed on an inner wall of the second air outlet.

In an embodiment of the present application, the motor further includes a fixed impeller, the fixed impeller is partially located in the second accommodating chamber to guide a flow direction of the airflow discharged through the movable impeller; wherein the movable impeller and the fixed impeller are disposed in sequence along a direction from the second air inlet to the second air outlet of the outer cover.

In an embodiment of the present application, an interior of the motor housing is hollow so as to form a first accommodating chamber, the motor housing being provided with a first air inlet communicating with the first accommodating chamber; and wherein the first accommodating chamber and the second accommodating chamber are communicated through a heat dissipation channel for heat dissipation inside the motor housing.

In an embodiment of the present application, an air flow channel communicating with the first accommodating chamber is also formed on the motor housing, and an outlet of the air flow channel is formed on an outer peripheral surface of the annular support frame.

In an embodiment of the present application, an air guide groove is formed on the outer cover, the air guide groove and an outer wall of the air cover are enclosed to form an air channel which communicates with the air flow channel and the second accommodating chamber; when the movable impeller rotates, a negative pressure generated by the movable impeller causes the air flow in from the first air inlet, flow through the first accommodating chamber, the air flow channel, the air channel and the second accommodating chamber in sequence, and then be discharged; wherein the air flow channel and the air channel constitute the heat dissipation channel for communicating the first accommodating chamber and the second accommodating chamber.

In an embodiment of the present application, an inlet of the air guide groove is disposed adjacent to the clamping structure.

In an embodiment of the present application, the motor housing includes a main housing and a rear cover, an interior of the main housing is hollow and defines an opening at one end, and the rear cover is detachably covered at the opening of the main housing to form the first accommodating chamber.

In an embodiment of the present application, the annular support frame is formed on the main housing and the first air inlet is formed on the rear cover.

The present invention also provides a motor, including: a motor housing; a motor body, the motor body including a rotating shaft provided on the motor housing, an end of the rotating shaft extending beyond the motor housing; and a waterproof gasket, the waterproof gasket being sleeved on the rotating shaft for waterproof sealing; wherein an end of the motor housing is provided with a sealing portion matched with the waterproof gasket, the waterproof gasket is provided with a plurality of first waterproof portions distributed around a circumference of the rotating shaft and extending toward the sealing portion, the sealing portion is provided with a plurality of second waterproof portions distributed in the circumferential of the rotating shaft and extending toward the waterproof gasket, the first waterproof portions are spaced apart from the second waterproof portions to prevent water vapor from entering the motor housing.

In an embodiment of the present application, the plurality of first waterproof portions are a plurality of first annular ribs disposed concentrically, adjacent first annular ribs form concentrically distributed first annular grooves; the plurality of second waterproof portions are a plurality of second annular ribs disposed concentrically, the plurality of second annular ribs separate the sealing portion into a plurality of concentrically distributed second annular grooves; wherein the first annular grooves accommodate the second annular ribs, and the second annular grooves accommodate the first annular ribs, so as to extend a flow path of the water vapor.

In an embodiment of the present application, free ends of the first annular ribs are in contact with groove bottoms of the second annular grooves.

In an embodiment of the present application, the number of the second annular grooves is 2 to 3.

In an embodiment of the present application, the waterproof gasket rotates synchronously with the rotating shaft, and a gap is provided between a side wall of the first annular rib and a side wall of the second annular groove in order to reduce friction.

In an embodiment of the present application, the motor further includes a movable impeller and a fixed impeller; the movable impeller is disposed on the end of the rotating shaft extending beyond the motor housing for blowing air; the fixed impeller is disposed at an end of the motor housing; wherein a thickness of the waterproof gasket in an axial direction is greater than or equal to a depth of the sealing portion so as to abut against the movable impeller for reducing friction between the movable impeller and the fixed impeller.

In an embodiment of the present application, the fixed impeller includes a first fixed impeller disposed adjacent to the movable impeller; wherein a recessed groove is formed on an end surface of the first fixed impeller adjacent to the movable impeller, so as to reduce the friction between the movable impeller and the first fixed impeller.

In an embodiment of the present application, the recessed groove extends from a center of the first fixed impeller to an edge direction.

In an embodiment of the present application, the motor further includes an air cover covering the movable impeller and the first fixed impeller.

Compared with the prior art, the present application has the following beneficial effects:

In the motor provided by the present application, by having the first accommodating chamber of the motor housing in communication with the second accommodating chamber of the air cover through the heat dissipation channel, by utilizing the negative pressure generated by the movable impeller in the second accommodating chamber to such the cooler air outside the motor housing into the motor housing, and by flowing the hot air in the motor housing to the second accommodating chamber through the above-mentioned heat dissipation channel and then discharging the hot air out of the air cover, the motor has the advantage of good heat dissipation effect.

### BRIEF DESCRIPTION OF DRAWINGS

In order to illustrate the technical solutions in the embodiments of the present application more clearly, the following briefly introduces the accompanying drawings which are used in the description of the embodiments. Obviously, the drawings in the following description are only some embodiments of the present application. For those of ordinary skill in the art, other drawings can also be obtained from these drawings without creative effort. Among which:
FIG. 1 is a schematic structural view of a motor proposed in a first embodiment of the present application;
FIG. 2 is an exploded structure schematic view of FIG. 1;
FIG. 3 is a half-sectional structure schematic view of FIG. 1;
FIG. 4 is a partial sectional structure schematic view of FIG. 1;
FIG. 5 is a structural representation of a waterproof gasket in FIG. 1;
FIG. 6 is a structural representation of an air cover in FIG. 1;
FIG. 7 is a structural representation of an outer cover in FIG. 1;
FIG. 8 is a structural representation of a first fixed impeller in FIG. 1;
FIG. 9 is a structural representation of a second fixed impeller in FIG. 1;
FIG. 10 is a schematic view of a positional relationship between a air flow channel and a stator in FIG. 1;
FIG. 11 is a schematic half-sectional structure view of a motor proposed in a second embodiment of the present application;
FIG. 12 is an enlarged structural schematic view of an area A in FIG. 11;
FIG. 13 is an enlarged structural schematic view of a region B in FIG. 11;
FIG. 14 is a structural representation of a first fixed impeller in FIG. 11;
FIG. 15 is a structural representation of a second fixed impeller in FIG. 11;
FIG. 16 is a schematic view of an exploded structure of a motor proposed in a third embodiment of the present application;
FIG. 17 is a sectional structure schematic view of FIG. 16;
FIG. 18 is a schematic view of an exploded structure of a motor proposed in a fourth embodiment of the present application; and
FIG. 19 is a schematic cross-sectional structure view of FIG. 18.

100-motor; 110-motor body; 111-rotating shaft; 112-rotor; 113-stator; 114-driving board; 120-motor housing; 121-main housing; 1211-first accommodating chamber; 1212-air flow channel; 1213-annular support frame; 122-rear cover; 1221-first air inlet; 130-movable impeller; 131-movable impeller air inlet; 132-movable impeller air outlet; 140-air cover; 141-second accommodating chamber; 142-first air inlet; 143-first air outlet; 150-outer cover; 151-air guide groove; 152-second air inlet; 153-second air outlet; 154-clamping structure; 160-fixed impeller; 161-first fixed impeller; 1611-central hole; 1612-recessed groove; 162-second fixed impeller; 1621-second fixed impeller body; 1622-connecting portion; 1623-limiting convex ring; 1624-claimping groove; 170-waterproof sealing structure; 171-waterproof gasket; 1711-first annular rib; 172-sealing portion; 1712-first annular groove;

111a-rotating shaft; 120a-motor housing; 1211a-first accommodating chamber; 1212a-air flow channel; 1212a'-air flow channel; 1213a-annular support frame; 1221a-first air inlet; 140a-air cover; 141a-second accommodating chamber; 142a-first air inlet; 143a-first air outlet; 160a-fixed impeller; 161a-first fixed impeller; 162a-second fixed impeller;

1211b-first accommodating chamber; 120b-motor housing; 1212b-air flow channel; 1221b-first air inlet; 130b-movable impeller; 140b-air cover; 141b-second accommodating chamber; 142b-first air inlet; 143b-first air outlet; 144b-air channel; 160b-fixed impeller;

180-partition plate; 111c-rotating shaft; 120c-motor housing; 121c-main housing; 1211c-first accommodating chamber; 1212c-air flow channel; 122c-rear cover; 1221c-first air inlet; 130c-movable impeller; 140c-air cover; 141c-second accommodating chamber; 142c-first air inlet; 143c-first air outlet; 160c-fixed impeller; 161c-first fixed impeller; 162c-second fixed impeller.

### DETAILED DESCRIPTION

In order to make the above objects, features and advantages of the present application more clearly understood, the specific embodiments of the present application will be described in detail below with reference to the accompanying drawings. It should be understood that the specific embodiments described herein are only used to explain the present application, but not to limit the present application. In addition, it should be noted that, for the convenience of description, the drawings only show some but not all the structures related to the present application. Based on the embodiments in the present application, all other embodiments obtained by those of ordinary skill in the art without creative work fall within the protection scope of the present application.

The terms "comprising" and "having" and any variations thereof in the present application are intended to cover a non-exclusive inclusion. For example, a process, a method, a system, a product or a device having a series of steps or elements is not limited to the listed steps or elements, but may optionally also include unlisted steps or elements; or, optionally include other steps or elements inherent to the process, the method, the product or the device.

Reference herein to an "embodiment" means that a particular feature, structure, or characteristic described in connection with the embodiment can be included in at least one embodiment of the present application. The appearances of the phrase in various places in the specification are not necessarily all referring to the same embodiment, nor a separate or alternative embodiment that is mutually exclusive with other embodiments. It is explicitly and implicitly understood by those skilled in the art that the embodiments described herein may be combined with other embodiments.

### First embodiment

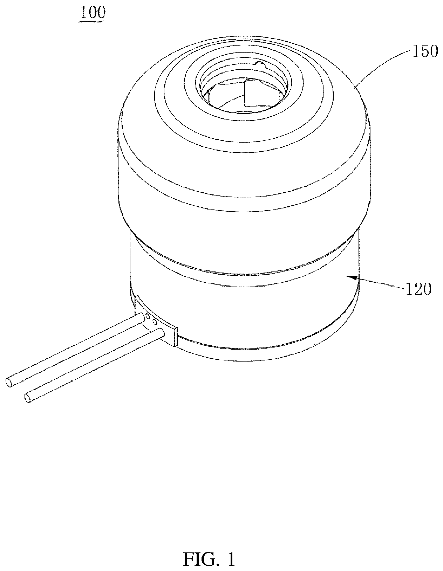

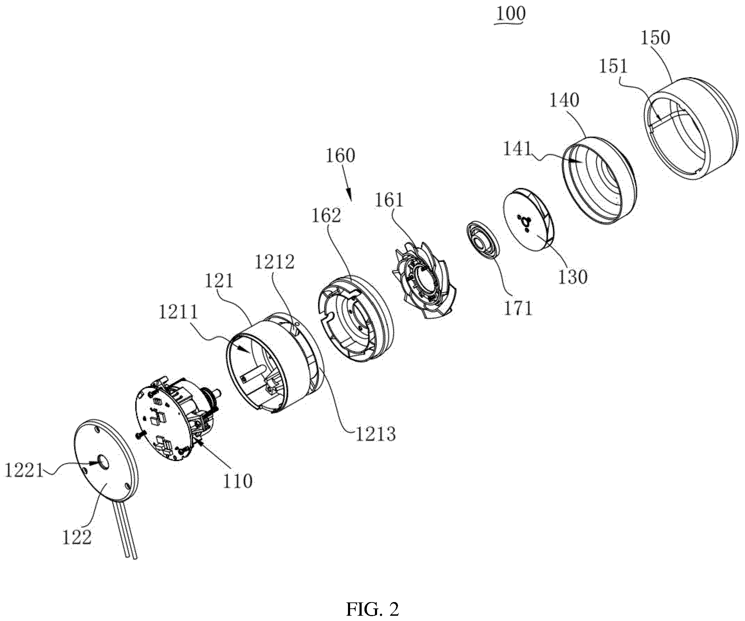

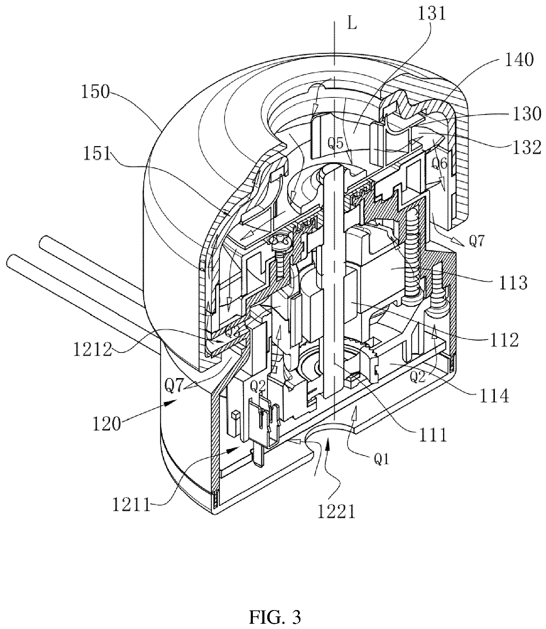

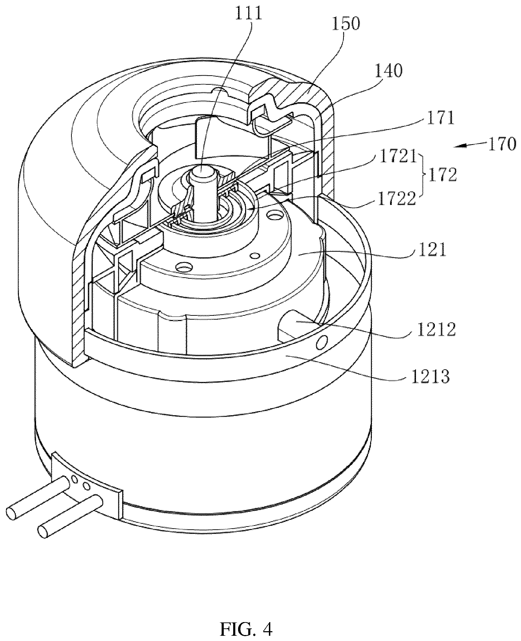

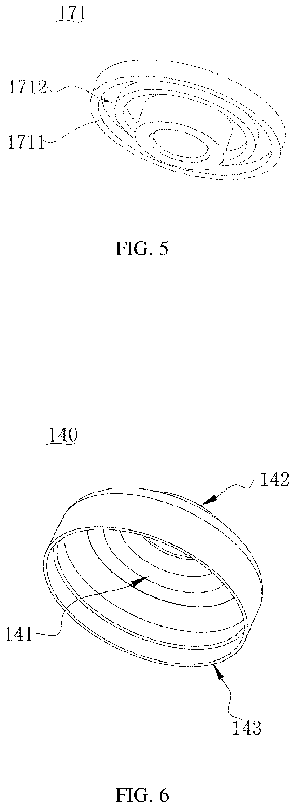

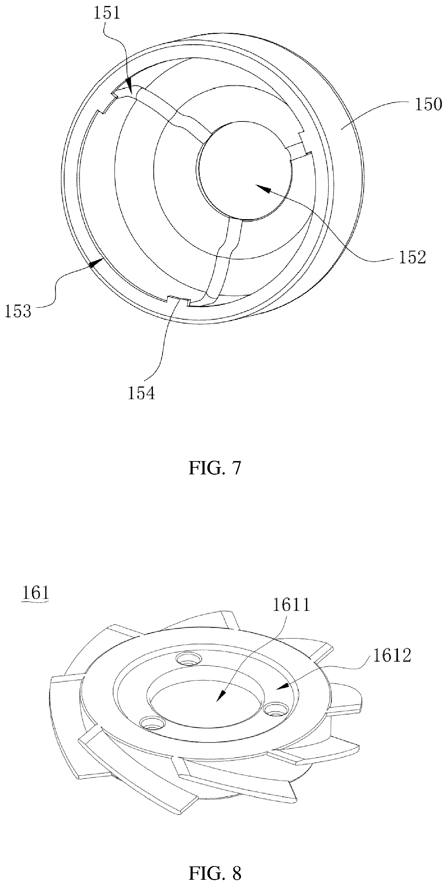

Referring to FIGS. 1 to 10, the present application proposes a motor 100 including: a motor housing 120, a motor body 110 mounted on the motor housing 120, a movable impeller 130, and an air cover 140. An interior of the motor housing 120 is hollow so as to form a first accommodating chamber 1211. In order to facilitate the installation of the motor body 110 to the motor housing 120, the motor housing 120 includes a main housing 121 and a rear cover 122. An interior of the main housing 121 is hollow, the main housing 121 defines a bottom opening, and the rear cover 122 is detachably covered at the bottom opening of the main housing 121, thereby forming the first accommodating chamber 1211. Therefore, when the motor body 110 is mounted, after the rear cover 122 is removed from the main housing 121, the motor body 110 can be easily mounted on the main housing 121. The motor body 110 includes a rotating shaft 111 rotatably disposed on the motor housing 120, a rotor 112 located in the first accommodating chamber 1211 and fixed on the rotating shaft 111, a stator 113 disposed in the first accommodating chamber 1211 and surrounding an outer circumference of the rotor 112, and a driving board 114 located in the first accommodating chamber 1211 and electrically connected to the stator 113. A portion of the rotating shaft 111 extending outside the main housing 121 is connected to the movable impeller 130. In the present application, a top of the rotating shaft 111 extends outside the main housing 121. The top of the rotating shaft 111 is connected with the movable impeller 130. The movable impeller 130 rotates with the rotation of the rotating shaft 111. The expressions "top" and "bottom" here are only for the purpose of illustration, and should not be construed as a limitation to the present application. The air cover 140 is disposed on a side of the main housing 121 away from the rear cover 122 and is disposed on the movable impeller 130. An interior of the air cover 140 is hollow so as to form a second accommodating chamber 141. The second accommodating chamber 141 is formed with a first air inlet 142 communicating with the second accommodating chamber 141 on a side of the air cover 140 away from the motor housing 120. The second accommodating chamber 141 is formed with a first air outlet 143 communicating with the second accommodating chamber 141 on another side of the air cover 140 adjacent to the motor housing 120. In the present application, the second accommodating chamber 141 may be understood as a through hole extending through the air cover 140 in an axial direction thereof. The movable impeller 130 is located in the second accommodating chamber 141. The movable impeller 130 has a plurality of movable impeller air inlets 131 and a plurality of movable impeller air outlets 132. The movable impeller air outlet 132 communicates with the outside atmosphere. When the rotating shaft 111 drives the movable impeller 130 to rotate, the air enters the second accommodating chamber 141 from the first air inlet 142, and then flows to the plurality of movable impeller air outlets 132 through the plurality of movable impeller air inlets 131, so that the movable impeller 130 is blown in the second accommodating chamber 141 to form a high-speed airflow. As a result, the second accommodating chamber 141 forms a negative pressure.

During the operation of the existing wet and dry motor, the stator 113 and the driving board 114 in the motor housing 120 generate a large amount of heat, and the air in the motor housing 120 cannot flow effectively. It cannot dissipate the heat from the stator 113 and the driving board 114, resulting in an excessively high temperature rise of the motor, and the motor cannot be used normally. In order to dissipate the heat of the stator 113 and the driving board 114 in the motor housing 120, the motor 100 of the present application is provided with at least one heat dissipation channel which communicates with the first accommodating chamber 1211 of the motor housing 120 and the second accommodating chamber 141 of the air cover 140. A bottom of the motor housing 120 is provided with a first air inlet 1221 which communicates with the first accommodating chamber 1211. The first air inlet 1221 is formed in the center of the rear cover 122 for air intake. The heat dissipation channel and the first air inlet 1221 are located on opposite sides of the motor housing 120, respectively. In this embodiment, the first air inlet 1221 is formed at the bottom of the motor housing 120. The heat dissipation channel is located above the motor housing 120. Installation gaps exist between the motor body 110 and an inner wall of the motor housing 120 for providing a flow space for airflow. Specifically, installation gaps exist between the stator 113 and the inner wall of the motor housing 120, and between the driving board 114 and the inner wall of the motor housing 120, so as to form the above-mentioned flow space. When the motor of the present application works, the movable impeller 130 is driven to rotate, and the second accommodating chamber 141 forms a negative pressure. At this time, an airflow Q1 outside the motor housing 120 enters the first accommodating chamber 1211 through the first air inlet 1221. An airflow Q2 entered the first accommodating chamber 1211 passes through the driving board 114 and the stator 113 from bottom to top, and then enters the second accommodating chamber 141 through the heat dissipation channel. An airflow Q5 in the second accommodating chamber 141 is discharged from the air cover 140 through the movable impeller 130. An airflow Q7 discharged from the air cover 140 enters the outside atmosphere. Therefore, the negative pressure generated in the second accommodating chamber 141 by the movable impeller 130 can draw the cooler air outside the motor housing 120 into the motor housing 120. The hot air in the motor housing 120 flows to the second accommodating chamber 141 through the above-mentioned heat dissipation channel and then is discharged out of the air cover 140, which can effectively dissipate the heat of the stator 113 and the driving board 114 in the motor housing 120, avoid excessive temperature rise of the motor, and improve the working efficiency and service life of the motor.

Considering that the motor will generate noise due to vibration during use, the noise greatly affects the performance and user experience of the motor. In order to reduce the noise of the motor, an outer cover 150 is sleeved on an outer peripheral surface of the air cover 140. The outer cover 150 is used to isolate vibration and noise, and can effectively improve the performance of the motor and the user experience. In a specific application scenario, the above-mentioned outer cover 150 is a shock-absorbing sleeve which is made of rubber material. In this embodiment, the air cover 140 is disposed in the outer cover 150 and is detachably connected to the motor housing 120 through the outer cover 150. It can be understood that the air cover 140 and the outer cover 150 are detachably connected to the motor housing 120 after being assembled. Specifically, an interior of the outer cover 150 is hollow so as to form a third accommodating chamber. A second air inlet 152 is formed in the third accommodating chamber on a side of the outer cover 150 away from the motor housing 120. A second air outlet 153 is formed in the third accommodating chamber on another side of the outer cover 150 adjacent to the motor housing 120. The air cover 140 is located in the third accommodating chamber. The air cover 140 and the outer cover 150 are respectively disposed coaxially with a rotation center axis L of the motor body 110. The above-mentioned rotation center axis L is a center axis of the rotating shaft 111. Extending directions of the second air inlet 152 and the first air inlet 142 are the same. The extending directions here refer to axial directions of the air cover 140 and the outer cover 150. The extending direction of the first air inlet 1221 and the extending direction of the rotation center axis L are collinear or parallel.

In this embodiment, an annular support frame 1213 is provided on the top of the main housing 121. The annular support frame 1213 is arranged on an outer circumference of the main housing 121 around a circumference of the main housing 121. The annular support frame 1213 is disposed adjacent to the air cover 140. The top of the main housing 121 is also formed with at least one air flow channel 1212 communicating with the first accommodating chamber 1211. The air flow channel 1212 is disposed on the side of the main housing 121 adjacent to the air cover 140. The air flow channel 1212 extends from the first accommodating chamber 1211 to the annular support frame 1213. The air flow channel 1212 and the annular support frame 1213 are integrally formed into an integral structure. The extending direction of the air flow channel 1212 is perpendicular to the extending direction of the rotation center axis L. At least one air channel communicating the air flow channel 1212 and the second accommodating chamber 141 is provided between the outer cover 150 and the air cover 140. In this embodiment, the air channel and the air flow channel 1212 constitute a heat dissipation channel which communicates with the first accommodating chamber 1211 and the second accommodating chamber 141. The air flow channel 1212 is arranged in a one-to-one correspondence with the air channel.

Specifically, at least one air guide groove 151 is formed on an inner wall of the outer cover 150, which is distributed along its generatrix and communicates with the air flow channel 1212 and the second accommodating chamber 141. The air guide groove 151 and an outer wall of the air cover 140 are enclosed to form the above-mentioned air channel. The air guide grooves 151 extend along a generatrix direction of the outer cover 150. The generatrix refers to a moving line forming a curved surface of the outer cover 150. An outlet of the air flow channel 1212 is formed on the outer peripheral surface of the annular support frame 1213. The inlet of the air channel is facing the outlet of the air flow channel 1212. Part of the outlet of the air channel is formed on a perforated wall of the second air inlet 152 so as to communicate with the second accommodating chamber 141. The part of the outlet of the air channel formed on the perforated wall of the second air inlet 152 means an outlet of the air guide groove 151 is formed on the perforated wall of the second air inlet 152. When the movable impeller 130 works, the negative pressure generated by the movable impeller 130 causes the airflow Q1 to flow into the first accommodating chamber 1211 from the first air inlet 1221. The airflow Q2 entered the first accommodating chamber 1211 passes through the driving board 114 and the stator 113, and then flows upwardly into the air flow channel 1212. The airflow Q3 entered the air flow channel 1212 flows upwardly through the air channel. The airflow Q4 in the air channel enters the second accommodating chamber 141 through the second air inlet 152 and the first air inlet 142 in sequence. The airflow Q5 entered the second accommodating chamber 141 passes through the movable impeller 130 and then is discharged out of the outer cover 150.

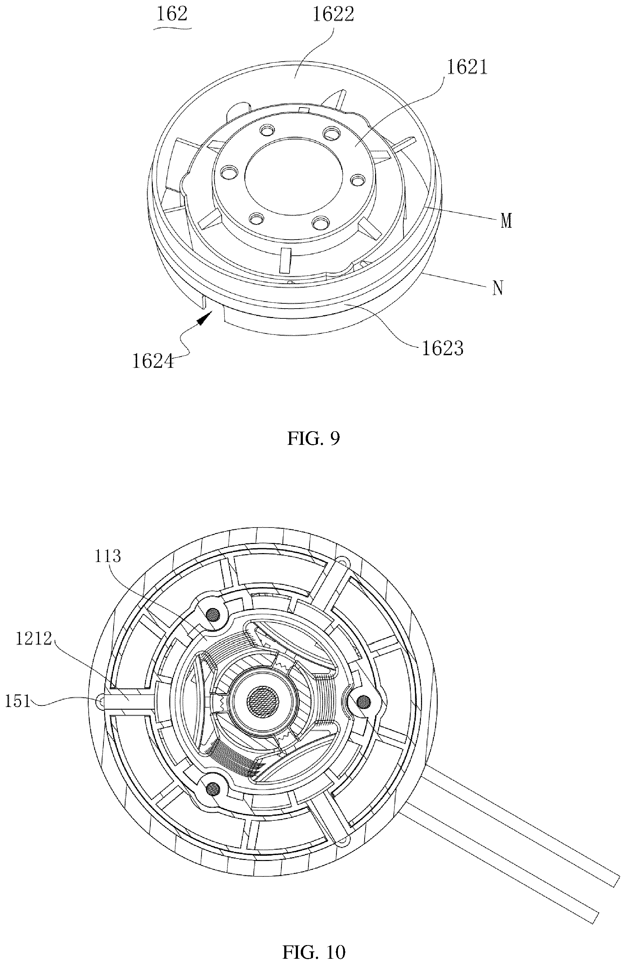

Referring to FIG. 10, in order to take away the heat of the stator 113 to the greatest extent and achieve an ideal heat dissipation effect, the arrangement relationship between a plurality of coils wound on the stator 113 and the air flow channel 1212 is as follows: at least one air flow channel 1212 is provided between every two adjacent coils, which has the advantage of good heat dissipation effect. In a specific application scenario, the number of coils is i, and the number of air channels 1212 is j, where i=j. That is, there is one air flow channel 1212 between every two adjacent coils. Therefore, the structure of the motor 100 is simplified as much as possible while ensuring sufficient heat dissipation of the stator 113.

Considering the convenience of installation of the outer cover 150, the air cover 140 and the outer cover 150 are assembled into a whole and then snap-connected to the annular support frame 1213. Specifically, a clamping structure 154 is provided at the second air outlet 153 of the outer cover 150. The outer cover 150 is clamped with the annular support frame 1213 through the clamp structure 154. The air cover 140 is disposed on the motor housing 120 through the outer cover 150. The clamping structure 154 includes clamping blocks formed on the inner wall of the second air outlet 153. The clamping blocks are distributed at equal intervals along a circumferential direction of the second air outlet 153.

In order to avoid air leakage at the connection between the air flow channel 1212 and the air guide groove 151, thereby disturbing the negative pressure generated in the air flow channel 1212, preferably, the clamping block and the air guide groove 151 are located on an extension line of the same generatrix, and the inlet of the air guide groove 151 is arranged adjacent to the clamping block. Therefore, in addition to being used for snapping, the clamping block also has the function of guiding the flow direction of the airflow. When the movable impeller 130 is working, the negative pressure generated by the movable impeller 130 makes the airflow in the first accommodating chamber 1211 flow through the air flow channel 1212, the air guide groove 151 of the outer cover 150, the second air inlet 152, the first air inlet 142 and the second accommodating chamber 141 in sequence, and finally is directly discharged into the atmosphere through the movable impeller 130. In the above process, after the airflow flows out of the air flow channel 1212, due to the blocking effect of the clamping block, the air flow channel 1212 is not directly communicated with the atmosphere, but is communicated with the inlet of the air guide groove 151. Therefore, the airflow flowing out from the first accommodating chamber 1211 can flow along the air flow channel 1212, the air guide groove 151, the second air inlet 152, the first air inlet 142 and the second accommodating chamber 141 under the action of the movable impeller 130, and the airflow is finally discharged from the movable impeller air outlet 132 of the movable impeller 130. If the clamping block is not disposed adjacent to the inlet of the air guide groove 151, there may be air leakage at the connection between the air flow channel 1212 and the air guide groove 151, which will interfere with the negative pressure generated in the air flow channel 1212. As a result, the airflow in the motor housing 120 cannot flow out from the air flow channel 1212 under the action of negative pressure, thereby affecting the heat dissipation effect.

The motor further includes a fixed impeller 160 which has the function of guiding the airflow direction and reducing noise. The fixed impeller 160 is detachably disposed on the top of the main housing 121 and is clamped with the annular support frame 1213. In order to improve the guiding effect of the airflow direction, the fixed impeller 160 includes a first fixed impeller 161 and a second fixed impeller 162. The first fixed impeller 161 and the second fixed impeller 162 are fixed on the top of the main housing 121 by screws. One end of the rotating shaft 111 extends from the main housing 121 to the outside, and then passes through the second fixed impeller 162, the first fixed impeller 161 and the movable impeller 130 in sequence. That is, the movable impeller 130, the first fixed impeller 161 and the second fixed impeller 162 are arranged in sequence from the first air inlet 142 to the first air outlet 143. The air cover 140 covers the movable impeller 130 and the first fixed impeller 161 and abuts against the side of the second fixed impeller 162 away from the motor housing 120. It can be seen from this that after the outer cover 150 is snapped onto the annular support frame 1213, the first air outlet 143 of the air cover 140 abuts on the side of the second fixed impeller 162 away from the motor housing 120. The movable impeller 130 and the first fixed impeller 161 are located in the second accommodating chamber 141. Part of the second fixed impeller 162 is located outside the second accommodating chamber 141. When the movable impeller 130 rotates, the airflow enters from the first air inlet 142 at the top of the movable impeller 130. The airflow Q5 flows from the movable impeller air outlet 132 on the side of the movable impeller 130 to the fixed impeller 160. The airflow Q6 at the fixed impeller 160 is discharged through the first air outlet 143. The airflow Q7 discharged from the air cover 140 enters the outside atmosphere. By providing the first fixed impeller 161 and the second fixed impeller 162, the guiding effect of the airflow direction can be improved, more air volume can be guided per unit time, the power of the air inhaled by the movable impeller 130 can be improved, and the heat dissipation effect of the airflow on the motor can be improved.

Specifically, the second fixed impeller 162 includes a second fixed impeller body 1621 and a connecting portion 1622 disposed on an outer circumference of the second fixed impeller body 1621 around a circumference of the second fixed impeller body 1621. The connecting portion 1622 is clamped with the annular support frame 1213 along the axial direction of the motor housing 120. The first air outlet 143 of the air cover 140 is in contact with the connecting portion 1622. Thereby, the stability and reliability of the overall structure of the motor can be enhanced.

Furthermore, a limiting convex ring 1623 is arranged on an outer peripheral surface of the connecting portion 1622 for dividing the outer peripheral surface of the connecting portion 1622 into a first connecting end M adjacent to the air cover 140 and a second connecting end N far away from the air cover 140. The first connecting end M and the second connecting end N are located on opposite sides of the limiting convex ring 1623, respectively. The first air outlet 143 of the air cover 140 is in contact with the first connecting end M. The second connecting end N is clamped to the annular support frame 1213 along the axial direction of the motor housing 120. The second connecting end N is also formed with a holding groove 1624 for defining the installation position of the clamping structure 154. It can be understood that the above-mentioned holding groove 1624 can also be provided on the annular support frame 1213. Alternatively, the above-mentioned holding grooves 1624 are formed on the second fixed impeller 162 and the annular support frame 1213 at the same time. In summary, the second fixed impeller 162 or/and the annular support frame 1213 are provided with the holding groove 1624 which is matched with the clamping structure 154. When the holding groove 1624 is disposed on the second connecting end N of the connecting portion 1622, the air flow channel 1212 is accommodated in the holding groove 1624. The holding groove 1624 is in an inverted "U" shape. The clamping structure 154 is clamped at an opening of the "U" shape. When the holding groove 1624 is arranged on the annular support frame 1213, the holding groove 1624 is arranged at the bottom of the annular support frame 1213, which is not shown in the drawings.

When the motor 100 is actually used, the air entering from the first air inlet 1221 is dry air without water vapor. The air entering the second accommodating chamber 141 through the second air inlet 152 and the first air inlet 142 is moist air and contains water vapor. The movable impeller air outlet 132 communicates with the atmosphere. When the movable impeller 130 rotates, the air with water vapor entering from the second air inlet 152 and the first air inlet 142 will be directly discharged into the atmosphere from the movable impeller air outlet 132 of the movable impeller 130, thereby realizing waterproofing.

The movable impeller 130 generates heat in working. When the movable impeller 130 stops working, condensed water is easily generated. In order to prevent water vapor from entering the interior of the motor housing 120 through the gap between the rotating shaft 111 and the motor housing 120, a waterproof sealing structure 170 is provided. The waterproof sealing structure 170 is located on the side of the rotating shaft 111 extending out of the motor housing 120. The waterproof sealing structure 170 includes a waterproof gasket 171, and a sealing portion 172 formed on the top of the motor housing 120 and matched with the waterproof gasket 171. The first fixed impeller 161 has a central hole 1611. The sealing portion 172 is located in the central hole 1611. The waterproof gasket 171 is located just above the sealing portion 172. The waterproof gasket 171 is sleeved on the rotating shaft 111 and rotates together with the rotating shaft 111 for waterproof sealing. Specifically, the waterproof gasket 171 is provided with a plurality of first waterproof portions distributed around the circumference of the rotating shaft 111 and extending toward the sealing portion 172. The sealing portion 172 is provided with a plurality of second waterproof portions distributed around the circumference of the rotating shaft 111 and extending toward the waterproof gasket 171. The first waterproof portion is spaced apart from the second waterproof portion to prevent water vapor from entering the motor housing 120. As a result, a movement path of the water vapor can be effectively extended, and the water vapor can be reduced or prevented from entering the interior of the motor housing 120, thereby prolonging the service life of the motor.

Furthermore, the plurality of first waterproof portions are a plurality of first annular ribs 1711 arranged concentrically. Adjacent first annular ribs 1711 surround and form concentrically distributed first annular grooves 1712. The plurality of second waterproof portions are a plurality of second annular ribs 1721 arranged concentrically. The plurality of second annular ribs 1721 divide the sealing portion 172 into a plurality of concentrically distributed second annular grooves 1722. The first annular grooves 1712 accommodate the second annular ribs 1721, the second annular grooves 1722 accommodate the first annular ribs 1711, and the first annular ribs 1711 and the second annular ribs 1721 are distributed alternately. Preferably, the number of the second annular grooves 1722 is 2 to 3, which simplifies the structure and reduces the difficulty of production while achieving waterproof sealing. In order to better isolate water vapor, the free ends of the first annular ribs 1711 are in contact with the groove bottoms of the second annular grooves 1722. In order to reduce the friction between the waterproof gasket and the sealing portion when rotating, a gap is provided between a side wall of the first annular rib 1711 and a side wall of the second annular groove 1722.

When the movable impeller 130 is installed on the rotating shaft 111, the waterproof gasket 171 can be used as a gasket of the movable impeller 130. Specifically, a thickness of the waterproof gasket 171 in an axial direction is greater than or equal to a depth of the sealing portion 172 to abut against the movable impeller 130 for reducing friction between the movable impeller 130 and the first fixed impeller 161. A recessed groove 1612 is formed on an end surface of the first fixed impeller 161 adjacent to the movable impeller 130. The recessed groove 1612 extends from a center of the first fixed impeller 161 to an edge direction. The recessed groove 1612 is used to further reduce the friction between the movable impeller 130 and the first fixed impeller 161.

### Second embodiment

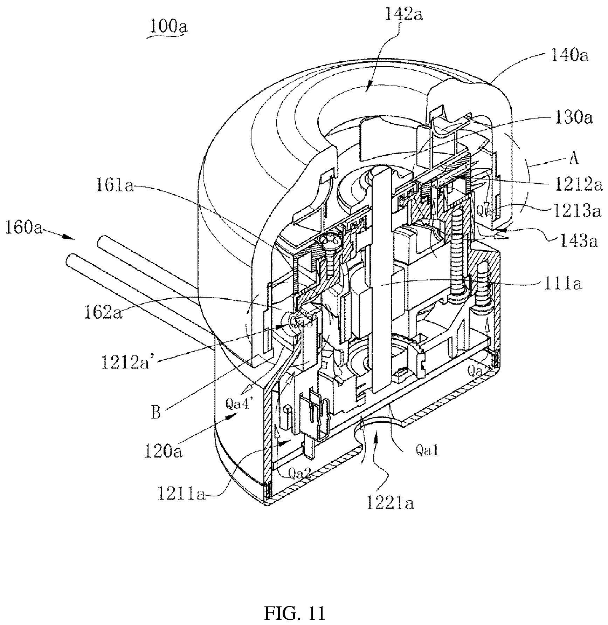

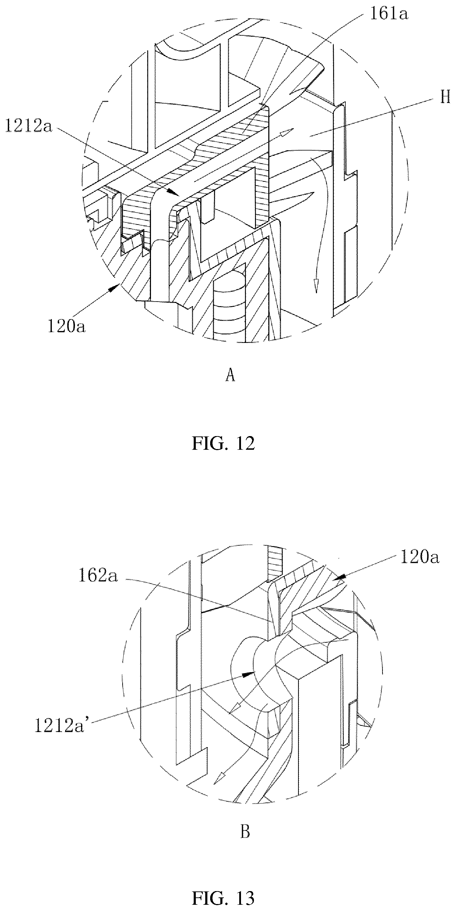

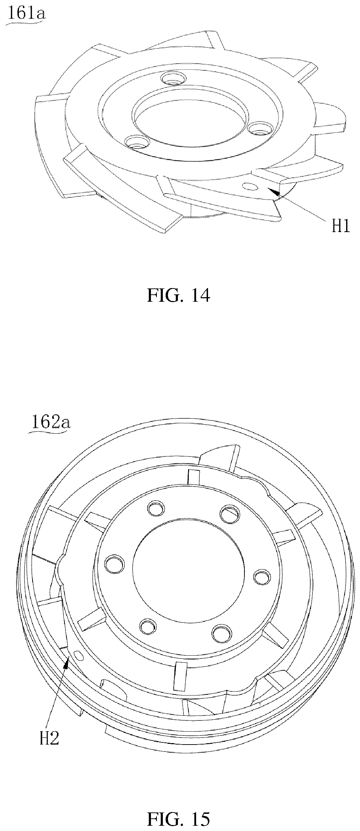

Referring to FIG. 11 to FIG. 15, the differences from the first embodiment are that the outer cover 150 is not provided, and the air cover 140a directly covers the movable impeller 130a and the fixed impeller 160a. That is, all the impellers are covered by the air cover 140a. The air cover 140a is directly connected to the motor housing 120a. Correspondingly, the arrangement form and position of the heat dissipation channel has changed. In this embodiment, the heat dissipation channel is the air flow channel 1212a.

Specifically, a first air inlet 142a is formed in the second accommodating chamber 141a on a side of the air cover 140a away from the motor housing 120a. A first air outlet 143a is formed in the second accommodating chamber 141a on another side of the air cover 140a adjacent to the motor housing 120a. The first air outlet 143a is used for connecting with the annular support frame 1213a of the motor housing 120a. In this embodiment, the air cover 140a and the motor housing 120a may be connected detachably or not.

A plurality of air guide vanes are arranged on the outer surface of the fixed impeller 160a. Adjacent air guide vanes on the fixed impeller 160a are sandwiched and formed with air guide channels H for air to flow. An air flow channel 1212a is provided between the first accommodating chamber 1211a and the air guide channel H so as to communicate with the first accommodating chamber 1211a and the air guide channel H. The inlet of the air flow channel 1212a communicates with the first accommodating chamber 1211a. The outlet of the air flow channel 1212a communicates with the air guide channel H. When the movable impeller 130a works, the negative pressure generated by the movable impeller 130a makes the air flow in from the first air inlet 1221a, flow through the first accommodating chamber 1211a, the air flow channel 1212a and the air guide channel H in sequence, and then be discharged. In order to improve the air outlet efficiency of the fixed impeller 160a, the movement direction of the air flowing out through the outlet of the air flow channel 1212a is the same as the movement direction of the air flow in the air guide channel H of the fixed impeller 160a, thereby having the advantages of smooth air outlet and high air outlet efficiency.

Furthermore, the air flow channel 1212a may be a hole communicating with the first accommodating chamber 1211a and the air guide channel H. Alternatively, the air flow channel 1212a may be a hose (not shown) that communicates with the first accommodating chamber 1211a and the air guide channel H. When the air flow channel 1212a is the hole, the air flow channel 1212a includes a motor housing flow channel formed on the motor housing 120a and a fixed impeller flow channel formed on the fixed impeller 160a. The flow channel of the motor housing communicates with the flow channel of the fixed impeller. Wherein the flow channel of the motor housing communicates with the first accommodating chamber 1211a. The above-mentioned fixed impeller flow channel communicates with the air guide channel H. When the air flow channel 1212a is connected by the hose, one end of the hose extends to the first accommodating chamber 1211a, and the other end extends to the air guide channel H.

In this embodiment, the fixed impeller 160a also includes a first fixed impeller 161a and a second fixed impeller 162a. A first air guide channel H1 is formed between adjacent air guide blades of the first fixed impeller 161a. A second air guide channel H2 is formed between adjacent air guide blades of the second fixed impeller 162a. The outlet of the air flow channel 1212a is communicated with the first air guide channel H1 and/or the second air guide channel H2, which includes three parallel solutions, namely: a first solution, in which the outlet of the air flow channel 1212a is communicated with the first air guide channel H1; at this time, when the movable impeller 130a works, the negative pressure generated by the movable impeller 130a causes the airflow Qa1 to flow in from the first air inlet 1221a; then, the airflow Qa2 in the first accommodating chamber 1211a enters the air flow channel 1212a; then, the airflow Qa3 in the air flow channel 1212a flows in the first air guide channel H1 of the first fixed impeller 161a; and finally, the airflow Qa4 in the first air guide channel H1 is discharged out of the air cover 140a; in the first solution, the air flow channel 1212a is substantially in an inverted "L" shape, including a motor housing flow channel extending in the axial direction of the central axis of the rotating shaft 111a and a fixed impeller flow channel extending along the radial direction of the rotating shaft 11 1a. In a second solution, the outlet of the air flow channel 1212a' communicates with the second air guide channel H2; at this time, when the movable impeller 130a works, the negative pressure generated by the movable impeller 130a causes the airflow Qa1 to flow in from the first air inlet 1221a; then, the airflow Qa2 in the first accommodating chamber 1211a enters the air flow channel 1212a'; then, the airflow Qa3 in the air flow channel 1212a' flows to the second air guide channel H2 of the second fixed impeller 162a; and finally, the airflow Qa4' in the second air guide channel H2 is discharged out of the air cover 140a; in the second solution, the air flow channel 1212a' extends substantially along the radial direction of the rotating shaft 111a. In a third solution, the outlet of the air flow channel is communicated with the first air guide channel H1 and the second air guide channel H2 at the same time.

### Third embodiment

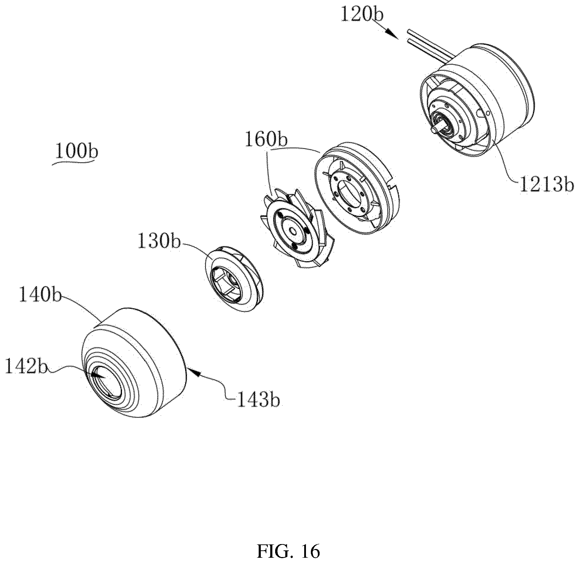

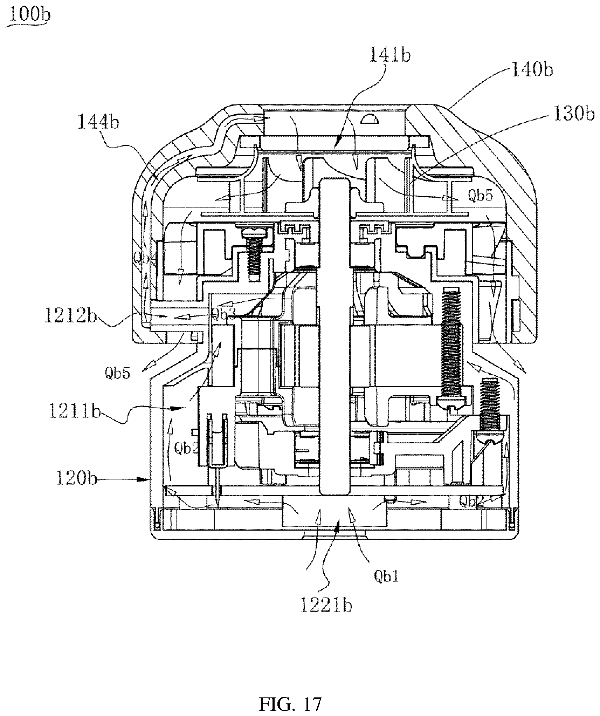

Referring to FIG. 16 and FIG. 17, the differences from the first embodiment are that the outer cover 150 is not provided, and the air cover 140b directly covers the movable impeller 130b and the fixed impeller 160b. That is, all the impellers are covered by the air cover 140b. The air cover 140b is directly connected to the motor housing 120b. Specifically, a first air inlet 142b is formed in the second accommodating chamber 141b on the side of the air cover 140b away from the motor housing 120b. A first air outlet 143b is formed in the second accommodating chamber 141b on another side of the air cover 140b adjacent to the motor housing 120b. The first air outlet 143b is used for connecting with the annular support frame 1213b of the motor housing 120b. Specifically, the first air outlet 143b is snap-connected or interference-connected with the motor housing 120b.

The heat dissipation channel in the present embodiment is composed of an air flow channel 1212b and an air channel 144b, and the difference lies in that the arrangement form of the air channel 144b has changed. Specifically, the motor housing 120b has at least one air flow channel 1212b communicating with the first accommodating chamber 1211b. The motor is provided with at least one air channel 144b communicating with the air flow channel 1212b and the second accommodating chamber 141b. The air flow channels 144b and the air flow channels 1212b are arranged in a one-to-one correspondence. The inlet of the air channel 144b is communicated with the air flow channel 1212b, and the outlet is communicated with the first air inlet 142b. When the movable impeller 130b works, the negative pressure generated by the movable impeller 130b causes the airflow Qb1 to flow into the first accommodating chamber 1211b from the first air inlet 1221b; then, the airflow Qb2 in the first accommodating chamber 1211b flows through the air flow channel 1212b; then, the airflow Qb3 in the air flow channel 1212b enters the air flow channel 144b; then, the airflow Qb4 in the air channel flows to the second accommodating chamber 141b; and finally, the airflow Qb5 in the second accommodating chamber 141b is discharged after passing through the movable impeller 130b. The air channel 144b can be arranged in various forms. Considering the convenience of installation, the air channel 144b is a through hole formed between the outer wall and the inner wall of the air cover 140b and extending along the generatrix direction thereof; or the air channel 144b is a hose provided on the inner wall of the air cover 140b.

### Fourth embodiment

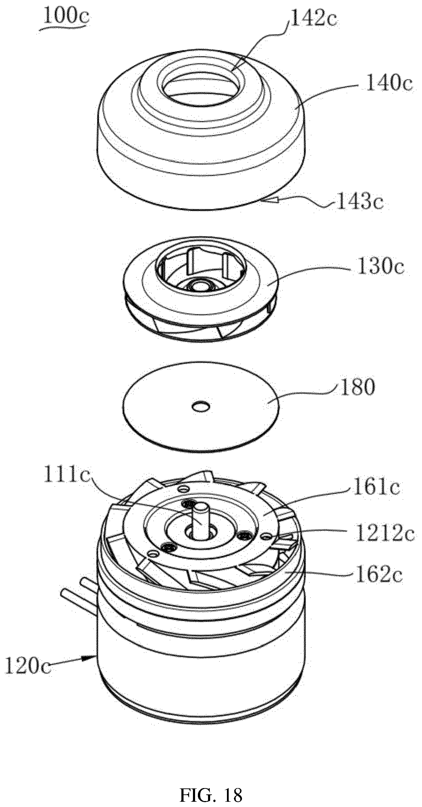

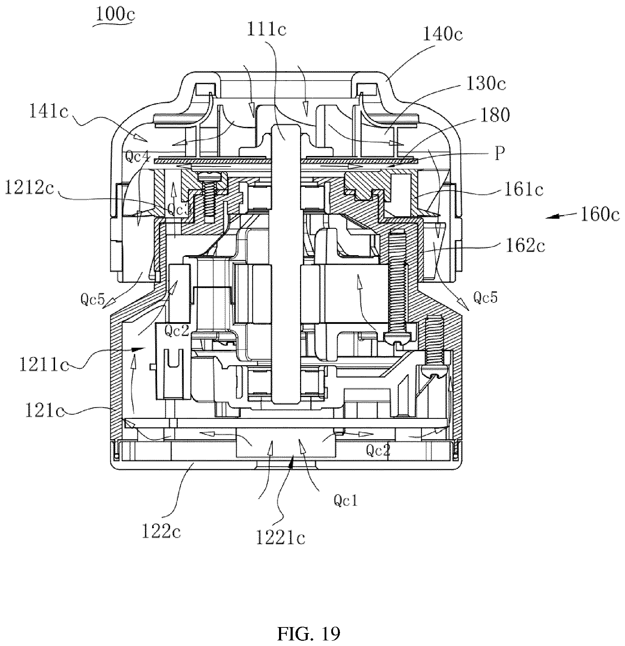

Referring to FIG. 18 and FIG. 19, the differences from the first embodiment are: different waterproof sealing structures, and different arrangement forms and positions of heat dissipation channels.

Specifically, the waterproof sealing structure is the partition plate 180. The partition plate 180 is located within the air cover 140c. The partition plate 180 is sleeved on one end of the rotating shaft 111c extending out of the motor housing 120c, and is located between the movable impeller 130c and the motor housing 120c for isolating water vapor. The partition plate 180 rotates synchronously with the rotating shaft 111c. A ventilation gap P extending in the radial direction of the rotating shaft 111c is formed between the partition plate 180 and the motor housing 120c. The ventilation gap P is located within the air cover 140c. The ventilation gap P communicates with the first accommodating chamber 1211c through the air flow channel 1212c. In this embodiment, the heat dissipation channel is formed by the air flow channel 1212c and the ventilation gap P. When the movable impeller 130c works, a negative pressure is generated at the ventilation gap P. The airflow flows into the first accommodating chamber 1211c from the first air inlet 1221c, and flows to the ventilation gap P through the air flow channel 1212c before being discharged. The flow path of the airflow is: Qc1-Qc2-Qc3-Qc4-Qc5.

Furthermore, the motor further includes a fixed impeller 160c which is detachably disposed on the top end of the motor housing 120c, and is located between the partition plate 180 and the motor housing 120c. Wherein the ventilation gap P is located between the partition plate 180 and the fixed impeller 160c. When the movable impeller 130c works, the air flows from the movable impeller 130c to the fixed impeller 160c, so that a negative pressure is generated at the ventilation gap P. Specifically, the fixed impeller 160c includes a first fixed impeller 161c and a second fixed impeller 162c. The movable impeller 130c, the first fixed impeller 161c and the second fixed impeller 162c are sequentially provided in a direction from the movable impeller 130c to the motor housing 120c. Wherein, the ventilation gap P is located between the partition plate 180 and the first fixed impeller 161c. The projection of the partition plate 180 in the axial direction of the rotating shaft 111c completely covers the movable impeller 130c. Therefore, water vapor can be prevented from entering the interior of the motor housing 120c through the above-mentioned partition plate 180, which has the advantage of good waterproof sealing effect.

The air flow channel 1212c includes: a first flow channel formed on the motor housing 120c, a second flow channel formed on the first fixed impeller 161c, and a third flow channel formed on the second fixed impeller 162c. The motor housing 120c includes a main housing 121c and a rear cover 122c. The first flow channel is formed on the main housing 121c. The first air inlet 1221c and the first flow channel are located on opposite sides of the motor housing 120c, respectively.

An interior of the air cover 140c is hollow so as to form a second accommodating chamber 141c. The second accommodating chamber 141c is provided with a first air inlet 142c on a side of the air cover 140c away from the motor housing 120c. The second accommodating chamber 141c is provided with a first air outlet 143c on another side of the air cover 140c adjacent to the motor housing 120c. The movable impeller 130c, the partition plate 180 and the first fixed impeller 161c are sequentially arranged in the second accommodating chamber 141c. The first air outlet 143c is in contact with a side of the second fixed impeller 162c away from the motor housing 120c.

It can be understood that the motor in the present application can be applied to different usage scenarios, which will be described below with examples.

The motor of the present application can be applied to a cleaning device for cleaning a surface to be cleaned. Wherein the cleaning device includes the motor 100 and the motor body. The motor 100 is installed in the motor body to provide cleaning power.

In summary, in the present application, by communicating the first accommodating chamber of the motor casing with the second accommodating chamber of the air cover through the heat dissipation channel, and by utilizing the negative pressure generated by the movable impeller in the second accommodating chamber to suck the external cooler air into the motor housing, the warmer air in the motor housing flows to the second accommodating chamber through the above-mentioned heat dissipation channel and then is discharged from the air cover, which has the advantage of good heat dissipation effect. Furthermore, by providing a clamping structure on the outer cover, the outer cover is clamped with the annular support frame on the motor housing through the clamping structure. Therefore, the connection between the outer cover and the motor housing has the advantages of stable and reliable connection. Furthermore, the inlet of the air guide groove is arranged adjacent to the clamping structure, which can effectively avoid air leakage at the connection between the air flow channel and the air guide groove. Furthermore, by providing the first fixed impeller and the second fixed impeller, the guiding effect of the airflow direction can be improved, more air volume can be guided per unit time, the power of the air inhaled by the movable impeller can be improved, and the heat dissipation effect of the airflow on the motor can be improved. Furthermore, by providing the waterproof sealing structure between the rotating shaft and the motor housing, water vapor can be prevented from entering the motor housing, which has the advantages of good waterproof sealing effect and effectively prolongs the service life of the motor.

The above descriptions are merely the embodiments of the present application, and are not intended to limit the patent scope of the present application. All equivalent structures or equivalent process transformations made by using the contents of the description and drawings of this application, or directly or indirectly applied in other related technical fields, are similarly included in the scope of patent protection of this application.

## Claims

1. A motor, **characterized by** comprising:
a motor housing, an interior of the motor housing being hollow so as to form a first accommodating chamber, the motor housing being provided with an annular support frame, the annular support frame being disposed on an outer side of the motor housing around a circumference of the motor housing;
a fixed impeller, the fixed impeller being detachably disposed on a side of the motor housing adjacent to the annular support frame, the fixed impeller being clamped with the annular support frame;
an air cover, the air cover being in contact with the fixed impeller, an interior of the air cover being hollow so as to form a second accommodating chamber;
a movable impeller, the movable impeller being disposed in the second accommodating chamber and is located on a side of the fixed impeller away from the annular support frame, the movable impeller being adapted for blowing air in the second accommodating chamber to form high-speed airflow;
an outer cover, the outer cover being sleeved on an outer peripheral surface of the air cover and being clamped with the annular support frame; and
a motor body, the motor body being disposed on the motor housing and partially extending out of the first accommodating chamber to be connected to the movable impeller, the motor body driving the movable impeller to rotate so that the second accommodating chamber forms a negative pressure;
wherein the motor is further provided with a heat dissipation channel communicating with the first accommodating chamber and the second accommodating chamber; the motor housing is also provided with a first air inlet communicating with the first accommodating chamber; and when the movable impeller rotates, the negative pressure generated by the movable impeller causes the air to flow in from the first air inlet, sequentially flow through the first accommodating chamber, the heat dissipation channel and the second accommodating chamber, and then be discharged.

2. The motor according to claim 1, wherein
an air flow channel communicating with the first accommodating chamber is formed on the motor housing; the air flow channel extends from the first accommodating chamber to the annular support frame; an outlet of the air flow channel is formed on an outer peripheral surface of the annular support frame; at least one air guide groove is formed on an inner wall of the outer cover to communicate with the air flow channel and the second accommodating chamber; the air guide groove and an outer wall of the air cover are enclosed to form an air channel; and
wherein the air flow channel and the air channel constitute the heat dissipation channel, an inlet of the air channel is facing the outlet of the air flow channel, and the outlet of the air channel communicates with the second accommodating chamber.

3. The motor according to claim 2, wherein
the fixed impeller comprises a first fixed impeller and a second fixed impeller, a first air inlet is formed in the second accommodating chamber on a side of the air cover away from the motor housing, a first air outlet is formed in the second accommodating chamber on another side of the air cover adjacent to the motor housing; and
wherein the movable impeller, the first fixed impeller and the second fixed impeller are disposed in sequence from the first air inlet to the first air outlet.

4. The motor according to claim 3, wherein
the second fixed impeller comprises a second fixed impeller body and a connecting portion which surrounds a circumference of the second fixed impeller body, and is disposed around an outer periphery of the second fixed impeller body; and
wherein the first air outlet is in contact with the connecting portion.

5. The motor according to claim 4, wherein
a limiting convex ring is annularly disposed on an outer peripheral surface of the connecting portion, the limiting convex ring is adapted for dividing the outer peripheral surface of the connecting portion into a first connecting end adjacent to the air cover and a second connecting end far away from the air cover; and
wherein the first air outlet is in contact with the first connecting end, and the second connecting end is clamped with the annular support frame along an axial direction of the motor housing.

6. The motor according to claim 5, wherein
an interior of the outer cover is hollow so as to form a third accommodating chamber; a second air inlet is formed in the third accommodating chamber on a side of the outer cover away from the motor housing; a second air outlet is formed in the third accommodating chamber on another side of the outer cover adjacent to the motor housing; and
wherein a clamping structure is provided at the second air outlet, the outer cover is connected with the annular support frame through the clamping structure, the air guide groove and the clamping structure are located on an extension line of a same generatrix, and an inlet of the air guide groove is disposed adjacent to the clamping structure.

7. The motor according to claim 6, wherein
a holding groove matched with the clamping structure is provided on the second fixed impeller and/or the annular support frame.

8. The motor according to claim 1, wherein
the motor housing comprises a main housing and a rear cover, an interior of the main housing is hollow and defines an opening at one end, and the rear cover is detachably covered at the opening of the main housing to form the first accommodating chamber; and
wherein the annular support frame is formed on the main housing, the first air inlet is formed on the rear cover, and an installation gap exists between the motor body and an inner wall of the motor housing, so as to form a space for air circulation in the motor housing.

9. The motor according to claim 2, wherein
the motor body comprises a rotating shaft disposed on the motor housing, a rotor located in the first accommodating chamber and fixed on the rotating shaft, and a stator disposed in the first accommodating chamber and disposed around an outer circumference of the rotor, a portion of the rotating shaft extending to an outside of the main housing is connected with the movable impeller; and
wherein a plurality of coils are wound around the stator, and at least one air flow channel is provided between every two adjacent coils.

10. The motor according to claim 9, wherein
the motor is a wet and dry motor which is also provided with a waterproof sealing structure; wherein the waterproof sealing structure comprises a waterproof gasket disposed on the rotating shaft and rotating with the rotating shaft, and a sealing portion formed on the motor housing and matched with the waterproof gasket; and
wherein the waterproof gasket is provided with a first annular rib distributed around a circumference of the rotating shaft, a second annular rib distributed around the circumference of the rotating shaft is disposed in the sealing portion, and the first annular rib and the second annular rib are distributed alternately.

11. A motor, **characterized by** comprising:
a motor housing, an interior of the motor housing being hollow so as to form a first accommodating chamber, the motor housing being provided with a first air inlet communicating with the first accommodating chamber;
an air cover, the air cover being disposed on the motor housing, an interior of the air cover being hollow so as to form a second accommodating chamber, a first air inlet is formed in the second accommodating chamber on a side of the air cover away from the motor housing;
a movable impeller, the movable impeller being disposed in the second accommodating chamber, the movable impeller being adapted for blowing air in the second accommodating chamber to form high-speed airflow;
an outer cover, the outer cover being disposed on the motor housing and sleeved on an outer peripheral surface of the air cover, the outer cover being provided with a second air inlet which is consistent with an extending direction of the first air inlet; and
a motor body, the motor body being disposed on the motor housing, the motor body extending out of the first accommodating chamber, the motor body being connected to the movable impeller to drive the movable impeller to rotate, so that the second accommodating chamber forms a negative pressure;
wherein an air flow channel communicating with the first accommodating chamber is formed on the motor housing; an air channel communicating with the air flow channel and the second accommodating chamber is formed between an inner wall of the outer cover and an outer wall of the air cover; and when the movable impeller is working, the negative pressure generated by the movable impeller causes the air to flow in from the first air inlet, flow through the first accommodating chamber, the air flow channel, the air channel and the second accommodating chamber in sequence, and then be discharged.

12. The motor according to claim 11, wherein
an air guide groove is formed on the inner wall of the outer cover, and the air guide groove and the outer wall of the air cover are enclosed to form the air channel.

13. The motor according to claim 11, wherein
an outlet portion of the air channel is formed on a perforated wall of the second air inlet.

14. The motor according to claim 11, wherein
the air cover is disposed in the outer cover.

15. The motor according to claim 11, wherein
the outer cover is a shock-absorbing sleeve which is made of rubber material.

16. The motor according to claim 11, wherein
a second air outlet opposite to the second air inlet is also formed on the outer cover, a clamping structure is provided at the second air outlet, and the outer cover is detachably connected to the motor housing through the clamping structure.

17. The motor according to claim 11, wherein
the motor body has a rotation center axis, an extending direction of the first air inlet is collinear or parallel with an extending direction of the rotation center axis, an extending direction of the air flow channel is perpendicular to the extending direction of the rotation center axis.

18. The motor according to claim 11, wherein
the motor housing comprises a main housing and a rear cover, an interior of the main housing is hollow and defines an opening at one end, and the rear cover is detachably covered at the opening of the main housing to form the first accommodating chamber.

19. The motor according to claim 18, wherein
the air cover is disposed on a side of the main housing away from the rear cover, the first air inlet is formed on the rear cover, and the air flow channel is disposed on a side of the main housing adjacent to the air cover.

20. The motor according to claim 19, wherein
the motor body comprises a rotating shaft disposed on the motor housing, a rotor located in the first accommodating chamber and fixed on the rotating shaft, and a stator disposed in the first accommodating chamber and disposed around an outer circumference of the rotor, a portion of the rotating shaft extending to an outside of the main housing is connected with the movable impeller; and
wherein an installation gap exists between the motor body and an inner wall of the motor housing, which is adapted to provide a flow space for airflow.

21. A motor, **characterized by** comprising:
a motor housing, the motor housing being provided with an annular support frame, the annular support frame being disposed around an outer side of the motor housing along a circumferential direction of the motor housing;
an air cover, the air cover being disposed on a side of the motor housing, an interior of the air cover being hollow so as to form a second accommodating chamber;
a movable impeller, the movable impeller being disposed in the second accommodating chamber, the movable impeller being adapted for blowing air in the second accommodating chamber to form high-speed airflow; and
an outer cover, the outer cover being sleeved on an outer peripheral surface of the air cover and being clamped with the annular support frame;
wherein a side of the outer cover adjacent to the annular support frame is provided with a clamping structure, and the outer cover is clamped with the annular support frame through the clamping structure.

22. The motor according to claim 21, wherein
an interior of the outer cover is hollow so as to form a third accommodating chamber, a second air outlet is formed in the third accommodating chamber on a side of the outer cover adjacent to the annular support frame, and a second air inlet is formed in the third accommodating chamber on another side of the outer cover away from the annular support frame;
wherein the clamping structure is provided at the second air outlet.

23. The motor according to claim 22, wherein
the clamping structure is a clamping block formed on an inner wall of the second air outlet.

24. The motor according to claim 22, further comprising:
a fixed impeller, the fixed impeller being partially located in the second accommodating chamber to guide a flow direction of the airflow discharged through the movable impeller;
wherein the movable impeller and the fixed impeller are disposed in sequence along a direction from the second air inlet to the second air outlet of the outer cover.

25. The motor according to claim 21, wherein
an interior of the motor housing is hollow so as to form a first accommodating chamber, the motor housing being provided with a first air inlet communicating with the first accommodating chamber; and
wherein the first accommodating chamber and the second accommodating chamber are communicated through a heat dissipation channel for heat dissipation inside the motor housing.

26. The motor according to claim 25, wherein
an air flow channel communicating with the first accommodating chamber is also formed on the motor housing, and an outlet of the air flow channel is formed on an outer peripheral surface of the annular support frame.

27. The motor according to claim 26, wherein
an air guide groove is formed on the outer cover, the air guide groove and an outer wall of the air cover are enclosed to form an air channel which communicates with the air flow channel and the second accommodating chamber; when the movable impeller rotates, a negative pressure generated by the movable impeller causes the air flow in from the first air inlet, flow through the first accommodating chamber, the air flow channel, the air channel and the second accommodating chamber in sequence, and then be discharged;
wherein the air flow channel and the air channel constitute the heat dissipation channel for communicating the first accommodating chamber and the second accommodating chamber.

28. The motor according to claim 27, wherein
an inlet of the air guide groove is disposed adjacent to the clamping structure.

29. The motor according to claim 25, wherein
the motor housing comprises a main housing and a rear cover, an interior of the main housing is hollow and defines an opening at one end, and the rear cover is detachably covered at the opening of the main housing to form the first accommodating chamber.

30. The motor according to claim 29, wherein the annular support frame is formed on the main housing and the first air inlet is formed on the rear cover.

31. A motor, **characterized by** comprising:
a motor housing;
a motor body, the motor body comprising a rotating shaft provided on the motor housing, an end of the rotating shaft extending beyond the motor housing; and
a waterproof gasket, the waterproof gasket being sleeved on the rotating shaft for waterproof sealing;
wherein an end of the motor housing is provided with a sealing portion matched with the waterproof gasket, the waterproof gasket is provided with a plurality of first waterproof portions distributed around a circumference of the rotating shaft and extending toward the sealing portion, the sealing portion is provided with a plurality of second waterproof portions distributed in the circumferential of the rotating shaft and extending toward the waterproof gasket, the first waterproof portions are spaced apart from the second waterproof portions to prevent water vapor from entering the motor housing.

32. The motor according to claim 31, wherein
the plurality of first waterproof portions are a plurality of first annular ribs disposed concentrically, adjacent first annular ribs form concentrically distributed first annular grooves;
the plurality of second waterproof portions are a plurality of second annular ribs disposed concentrically, the plurality of second annular ribs separate the sealing portion into a plurality of concentrically distributed second annular grooves;
wherein the first annular grooves accommodate the second annular ribs, and the second annular grooves accommodate the first annular ribs, so as to extend a flow path of the water vapor.

33. The motor according to claim 32, wherein
free ends of the first annular ribs are in contact with groove bottoms of the second annular grooves.

34. The motor according to claim 32, wherein
the number of the second annular grooves is 2 to 3.

35. The motor according to claim 32, wherein
the waterproof gasket rotates synchronously with the rotating shaft, and a gap is provided between a side wall of the first annular rib and a side wall of the second annular groove in order to reduce friction.

36. The motor according to claim 31, wherein
the motor further comprises a movable impeller and a fixed impeller;
the movable impeller is disposed on the end of the rotating shaft extending beyond the motor housing for blowing air;
the fixed impeller is disposed at the end of the motor housing; wherein a thickness of the waterproof gasket in an axial direction is greater than or equal to a depth of the sealing portion so as to abut against the movable impeller for reducing friction between the movable impeller and the fixed impeller.

37. The motor according to claim 36, wherein
the fixed impeller comprises a first fixed impeller disposed adjacent to the movable impeller;
wherein a recessed groove is formed on an end surface of the first fixed impeller adjacent to the movable impeller, so as to reduce the friction between the movable impeller and the first fixed impeller.

38. The motor according to claim 37, wherein
the recessed groove extends from a center of the first fixed impeller to an edge direction.

39. The motor according to claim 38, wherein
the motor further comprises an air cover covering the movable impeller and the first fixed impeller.
